# DEMANDE DE BREVET EUROPEEN

(11) **EP 1 245 486 A1**
(43) Date de publication de la demande: **02.10.2002**
(21) Numéro de dépôt: 01400771.0
(22) Date de dépôt: 26.03.2001
(51) Int. Cl.: B64C 3/48

(54) **Dispositif permettant aux planeurs d'avoir un profil biconvexe partiellement transformable, dans sa partie arrière, en profil creux**

(71) Demandeur: Geoffray, René, 78420 Carriéres sur Seine (FR)
(72) Inventeur: Geoffray, René, 78420 Carriéres sur Seine (FR)

(57) **Abrégé**

Dispositif permettant aux planeurs d'avoir un profil biconvexe partiellement transformable, dans sa partie arrière en profil creux.

Les deux profils sont de construction commune dans la partie avant: la pointe arrière est également commune mais basculante et coulissante, selon la configuration: profil biconvexe ou creux. Cette pointe arrière est solidaire d'un arbre tournant fixé sur la partie avant dans le sens de l'envergure de l'aile. A l'intrados, une partie souple est fixée avec soin de 75% à 90% et se courbe avec le déplacement de la pointe arrière, une autre à l'extrados n'est fixée que sur la partie à 71% et est maintenue appliquée par différents moyens possibles sur la pointe et glisse sur celle-ci en fonction de la courbure. L'action du pilote permet de passer d'un profil à l'autre. La figure démontre la cinématique de fonctionnement du dispositif.

En traits pleins: la pointe arrière (5), le bras (9) et son prolongement de (10) à l'axe (13), ce dernier relié à une bielle (14) articulée sur un point fixe (15), sont en position biconvexe. En tirets: le même ensemble est représenté en position profil creux, ceci par rotation de l'arbre de commande (10) qui occasionne le déplacement de cet ensemble sous l'action de la bielle (14), dont le point fixe (15) est situé sur l'un des cotés de la perpendiculaire joignant les deux positions de l'axe (13).

## Description

La présente invention concerne un dispositif permettant a des planeurs -qu'ils soient de performance, biplaces ou d'entraînement- de disposer, a la demande du pilote, en vol et alternativement, de deux profils: le premier, un biconvexe de base partiellement transformable dans sa partie arrière en un deuxième: un profil creux, ceci par un mécanisme intérieur à l'aile, ce qui autorise pour le premier cité de choisir un profil parmi les plus fins et les plus rapides possible. Les profils représentés sur les croquis sont des profils laminaires, mais cela n'est pas une obligation.

Le choix d'un profil pour un planeur est toujours délicat et souvent paradoxal. En effet, pour utiliser une ascendance thermique (80 ou 90% des cas) un planeur doit posséder, de préférence, un profil creux, synonyme de faible vitesse de chute (appelée Vz) et de vitesse sur la trajectoire assez lente, ce qui permet, pour une inclinaison raisonnable d'avoir dans cette ascendance un rayon de virage faible, donc de se maintenir dans les zones les plus avantageuses. En revanche, dès que le planeur est arrivé au sommet de l'ascendance, il lui faut pour attreindre le but prévu de son vol (épreuve de brevet, de concours ou record) le meilleur angle possible de vol plané (appelé finesse) et une grande vitesse horizontale car, plus la montée est rapide et la prise de distance également, plus le nombre de fois que cela peut se reproduire au cours d'un vol est rentable; la réussite est liée bien souvent aux qualités de ces deux performances. Mais pour voler vite à grande finesse le profil le plus favorable est le profil biconvexe, c'est-à-dire l'opposé du profil creux.

C'est pourquoi, dans les appareils à profil unique, ce dernier est très souvent un compromis entre un profil à faibles Vz et vitesse et un profil à grandes finesse et vitesse. Il est certain, et cela depuis bon nombre d'années, que la vitesse de vol à la finesse maximale est privilégiée au détriment de la vitesse à la chute minimale, avec les risques que cela comporte en cas d'ascendances devenant peu porteuses.

Une solution très utilisée actuellement est celle du profil à volet de courbure. Ce procédé impose toutefois, presque toujours, un profil spécialement étudié pour recevoir ce volet. Les inconvénients sont les suivants: a) un profil étudié pour recevoir un volet perd de ce fait la pureté qu'il aurait eue si on l'avait tracé uniquement pour la finesse maximale; b) il se trouve sur la partie de l'envergure où est installé ce volet une fente nuisible aussi bien à la traînée qu'à la portance, même si elle est plus ou moins obturée par de petits caches; c) il y a également un ou plusieurs guignols extérieurs; d) enfin, en position profil avec volet, l'angle que forme celui-ci avec l'intrados présente toujours une ligne brisée. Cet angle est en général atténué par le tracé de l'intrados qui se rapproche, ou même dépasse la corde de référence, avant l'articulation du volet de courbure, pour rendre l'angle entre l'intrados et le volet plus ouvert, mais l'angle ainsi réalisé est toujours trop reculé.

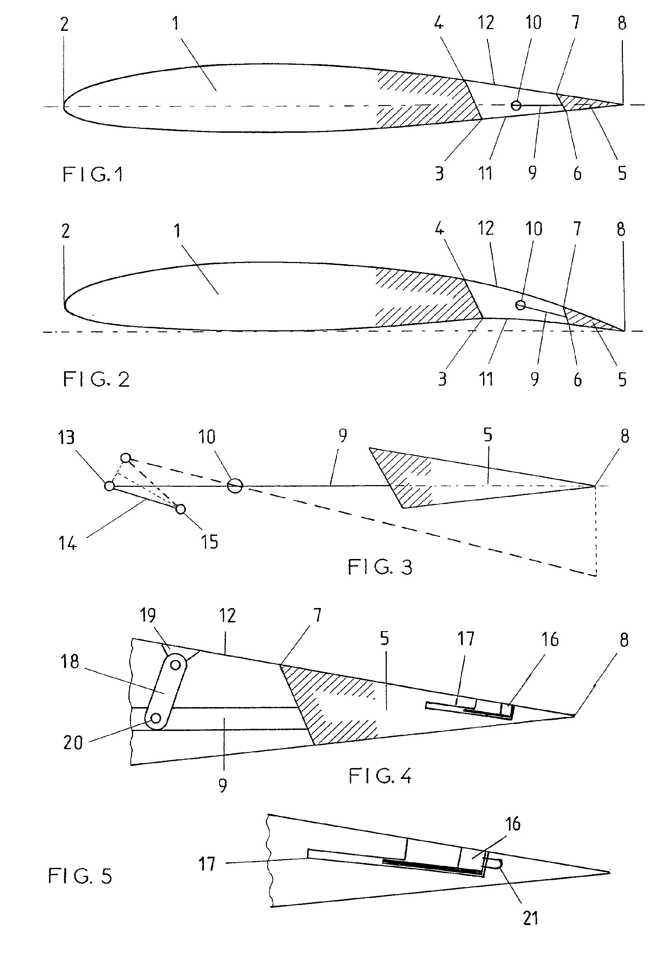

Le dispositif selon l'invention permet donc d'avoir sur un même appareil, deux profils utilisables en vol et alternativement: un biconvexe représenté figure 1 et modifiable dans sa partie arrière en profil creux, représenté figure 2. Les dessins de ces deux profils peuvent évidemment faire l'objet de légères variantes.

Les pourcentages utilisés ci-après ne le sont que pour mieux préciser les proportions, ils peuvent donc être modifiés -en plus ou en moins- pour obtenir, en partant du profil biconvexe choisi la courbure désirée pour le profil creux. La description ci-dessous est traitée comme étant une coupe à un endroit quelconque de la partie modifiable de l'envergure du planeur: soit les deux tiers environ.

L'aile de l'appareil est constituée d'une partie avant (1) commune aux deux profils, qui de 0% (2) à 75% (3) à l'intrados, et 71% (4) à l'extrados est de construction rigide: métallique, en bois, en plastique, en divers composites ou en tous autres matériaux actuellement utilisés, selon le mode de construction choisi. La partie arrière (5) est également commune et de même construction rigide de 90% (6) à l'intrados et de 88% (7) à l'extrados jusqu'à l'extrémité 100% (8). Cette partie arrière est basculante dans toute l'envergure de l'aile où le profil est modifiable: pour cela, elle est solidaire d'un bras (9) qui travrese et coulisse dans -ou autour- d'un arbre tournant (10) situé dans le sens de l'envergure de l'aile et qui est porté par la partie commune (1), lui-même relié au poste de pilotage par les moyens habituels. C'est le pilote qui, à sa convenance, commande la rotation de l'arbre qui produit le pivotement et le déplacement (recul ou avance) du bras (9) sur lequel est fixé la pointe du profil (5). Le nombre et la disposition des bras (9), qui maintiennent la partie arrière (5) étant un problème constructif n'a pas à être traité ici. Le coulissement du bras n'est pas illustré, pour une plus grande clarté, sur les figures 1 et 2, et fait l'objet de la figure 3.

A l'intrados, de 75% (3) à 90% (6) le revêtement (11) est souple - par plaque métallique, plastique ou autre - c'est-à-dire qu'il n'est pas relié a la structure entre les points ci-dessus, mais seulement fixé avec le plus grand soin, juste au niveau de ceux-ci, par collage, rivetage à logement embrèvé, fraisé, soudure ou autre. Dans le cas d'une construction en plastique moulé, ce résultat peut être obtenu par la suppression de la structure rigide (entre 3 et 6), laissant ainsi toute sa souplesse au revêtement (11) venant de moulage; ceci évidemment lorsque le profil est dans la position biconvexe, c'est-à-dire: la corde de référence du profil, le bras et la corde de la partie arrière alignés, selon le dessin de la figure 1.

Avant de préciser les caractéristiques de la partie du revêtement souple (12) de l'extrados, il est utile d'étudier le fonctionnement du dispositif traité ici.

La cinématique, figure 3, dont l'échelle est environ 3,5 fois plus grande que celle des figures 1 et 2, est la suivante: pour ne pas occasionner de diminution de surface (aussi faible soit-elle), et surtout éviter les contraintes mécaniques sur le revêtement souple (11) de l'intrados qui est fixé solidement en (3) et (6) sur les parties communes: la partie avant du profil (1) et la pointe basculante et coulissante (5) des figures 1 et 2, la pointe arrière, en même temps qu'elle pivote, avance ou recule, suivant le cas, pour maintenir à la partie souple de l'intrados la longueur idéale pour la courbure désirée du profil creux. La cinématique de cette partie du profil est développée ci-dessous.

A titre d'exemple non limitatif, et afin de mieux expliquer cette figure (3), il est possible -pour un profil de un mètre par exemple- de la chiffrer comme suit. Du centre de l'arbre (10) à 100% (8): 189 millimètres en position biconvexe; distance du bord de fuite 100% (8) entre les deux configurations des figures 1 et 2: 48 millimètres, en pointillé sur la figure 3 et perpendiculaire à la corde du profil de la figure 1; il y a là les deux cotés d'un triangle rectangle, la droite (représentée en tirets) qui joint le centre de l'arbre (10) à l'emplacement de l'extrémité 100% (8) en position profil creux, est l'hypoténuse qui mesure donc 195 millimètres, (ce nouvel emplacement de l'extrémité 100% n'est pas référencé, pour n'avoir, sur un croquis, qu'une annotation par position d'élément).

Lorsque le pilote actionne le mécanisme qui fait légèrement tourner l'arbre (10) dans le but d'utiliser le profil creux, l'ensemble - pointe AR. bras et son prolongement en avant de l'arbre (10)- maintenu par un axe (13) sur une bielle (14), elle même articulée sur un point fixe (15) est obligé de glisser dans -ou autour de - l'arbre vers l'arrière, et l'extrémité de la pointe (8) vient se placer dans la position occupée sur la figure 2, tangente à la corde de référence, selon la méthode dont ces profils sont habituellement représentés; la distance de 10 à 13 est de 66 millimètres -d'axe à axe- en profil biconvexe.

Pour obtenir le résultat recherché par ce dispositif, la position du point fixe (15) est déterminée comme suit: l'hypoténuse étant plus longue de 6 millimètres que le grand coté, la position qu'occupera l'extrémité du bras (13) sera donc, en profil creux, dans le prolongement de cette hypoténuse, mais 6 millimètres plus près du centre de l'arbre (10) soit à 60 millimètres, position non annotée. Dans ces conditions, le point fixe (15) où s'articule la bielle (14) est sur la perpendiculaire partant du milieu de la droite (d'un coté ou de l'autre) joignant les deux positions successives du point (13) de la figure 3. Quant à la longueur de la biellette (14) elle est de 40 millimètres, dans l'exemple ci-dessus.

Ce système est parfaitement compatible avec une aile trapézoïdale, il suffit que les cotes de tous les profils soient rigoureusement proportionnelles à celles utilisées dans le profil servant de référence.

Revenons aux figures 1 et 2. A l'extrados, de 71% (4) à 88% (7) le revêtement (12) est également souple, à l'aide des mêmes matériaux que ceux déja utilisés à l'intrados mais, contrairement à celui-ci, il n'est fixé que sur la partie avant (1) en (4) et recouvre toute la partie AR. basculante jusqu'au bord de fuite 100% (8).En position profil creux, il ne recouvre plus entièrement la partie basculante (5), et dans l'exemple chiffré présent, il est trop court de 12 à 13 millimètres; pour cette raison, le revêtement dans sa partie arrière est assez fin et biseauté en conséquence. Ce revêtement est maintenu en place par un dispositif métallique, plastique ou autre, en deux parties (16) et (17) son emplacement est représenté sur la figure 4 (dont l'échelle est plus grande que celle des figures 1 et 2 de 4,6 environ) et le détail de ce dispositif est montré sur la figure 5, échelle encore double de la précédente. Sur cette dernière figure, les deux parties (16) et (17) sont représentées de profil comme sur la figure 4. Ces deux parties, une pièce plate engagée dans une fente,coulissent l'une dans l'autre et empèchent ainsi tout soulêvement du revêtement; elles se trouvent sur toute la longueur de la partie modifiable de l'aile. La partie supérieure (16) est solidaire du revêtement et fixée légèrement en avant de la différence de longueur du recouvrement entre les différentes positions. La fente (17) est partie intégrante de la pointe basculante (5); les différentes longueurs sont calculées en conséquence, et cela permet au revêtement (12), de rester bien appliqué sur la pointe (5), grâce à la pièce (16) engagée dans la fente (17),lorsque le pilote passe du profil biconvexe au profil creux, ou vice versa. Des butées peuvent être placées de telle façon qu'elles permettent une tension correcte du revêtement. De même, toujours pour éviter un soulêvement du revêtement en avant du point 7 où il vient s'appliquer sur la pointe basculante (5), il est maintenu par un système qui peut être une biellette (18) qu'un axe fixe à une pièce (19) solidaire du revêtement et articulée en (20) sur le bras (9), et dont le débattement est calculé pour permettre la courbure correcte de ce revêtement; des parties solidaires de l'avant commun (1) peuvent être disposées de telles façons que les constituants souples, (11) en biconvexe et (12) en creux puissent avoir des points d'appui.

Les deux systèmes de la figure 4, décrits ci-dessus, qui maintiennent le revêtement (12) dans sa position normale, ne sont pas représentés sur les figures 1, 2 et 3 pour ne pas surcharger ces dessins; il s'agit des parties (16) et (17) coulissantes entre elles et de la bielle (18) avec ses points de fixation (19) et (20) sur le revêtement (12) et le bras (9).

Ces deux derniers systèmes, figure 4 et 5, ne sont pas exhaustifs, ils peuvent être réalisés de très nombreuses façons, par exemple on peut placer un tenon (21) figure 5 pour mieux maintenir le constituant souple, non représenté sur la figure 4. Cela ne change rien à la transformation d'un profil biconvexe en profil creux qui est réalisée grâce à la cinématique de la figure 3.

Il ressort de la description ci-dessus qu'un planeur, grâce au système décrit, pourra bénéficier de deux profils: un biconvexe et un creux; ces deux profils étant sans fente, sans guignol et sans la moindre concession dans leur tracé à l'installation ultérieure d'un volet de courbure. Les deux bénéficient d'une surface parfaitement lisse à l'extrados comme à l'intrados et en ce qui concerne le profil creux, il n'y a pas de ligne brisée occasionnée par le volet mais une courbe où le creux est beaucoup moins reculé que sur un profil à volet de courbure, donc dans une position nettement plus favorable que la brisure de celui-ci.

Il n'est pas obligatoire que la modification du profil se fasse en une manoeuvre unique. Cela peut se faire avec 3 ou 4 positions intermédiaires, il est même possible de faire en biconvexe un bord de fuite relevé de quelques degrés pour une prise de vitesse plus rapide dans les descendances, et permettre un convoyage, en vol, à grande vitesse,et en creux un bord de fuite abaissé de plusieurs degrés, pour ralentir la vitesse à l'atterrissage, surtout en campagne, et faire des treuillages efficaces, puisque ces derniers pourront se faire à une vitesse beaucoup plus faible, ceci par rapport aux tracés de base des figures 1 et 2.

## Revendications

1. Dispositif, pour équiper les planeurs de deux profils différents, **caractérisé en ce que** le profil de base: un profil biconvexe destiné aux longs planés (la finesse) à grande vitesse peut se transformer, dans sa partie arrière, en un profil creux, occasionnant une faible vitesse de chute (Vz) à une vitesse de vol assez lente, ce qui permet le vol en spirale à une inclinaison raisonnable.

2. Dispositif, selon la revendication 1, **caractérisé en ce que** les deux profils ont une importante partie commune à l'avant (1) et une pointe arrière (5) également commune mais basculante et coulissante. Ces deux parties sont reliées par des parties souples (11) et (12) donnant des courbes, suivant au mieux le tracé des deux profils choisis.

3. Dispositif, selon les revendications 1 et 2, **caractérisé en ce que** la partie souple (11) reliant les parties communes avant et arrière élimine toute fente et tout guignol, procurant ainsi une aile parfaitement lisse à l'intrados.

4. Dispositif, selon les revendications 1 et 2, **caractérisé en ce que** la partie souple de l'extrados (12) recouvre entièrement, en biconvexe, la pointe arrière (5) et incomplètement, en creux, cette partie est maintenue en place par tout système lui permettant de glisser, sans soulèvement sur la pointe arrière (5).

5. Dispositif, selon les revendications précédentes prises dans leur ensemble, **caractérisé en ce que** la cinématique figure 3: la biellette (14) articulée sur un point fixe (15) -qui peut, au choix avoir deux positions- et reliée au prolongement du bras (13), permet au profil creux d'avoir la même longueur que le biconvexe et à la zone creuse de ne pas être trop reculée, ceci par un pivotement et un glissement dans (ou autour) de l'axe (10) du bras (9) portant la pointe arrière (5).

6. Dispositif, selon les revendications précédentes prises dans leur ensemble, **caractérisé en ce que** le maintien de la longueur entre le profil biconvexe et le profil creux, obtenu par l'action de la bielle (14) permet au revêtement (11) de conserver sa longueur initiale et d'éviter sur celui-ci toute contrainte mécanique.

7. Dispositif, selon les revendications précédentes prisée dans leur ensemble, **caractérisé en ce que** le passage d'un profil à l'autre peut se faire en plusieurs étapes, commandées par le pilote. En biconvexe le bord de fuite peut être, par rapport à la corde de référence, relevé de quelques degrés pour une prise de vitesse plus rapide dans les descendances, et permettre également un remorquage en convoyage à une plus grande vitesse, et en profil creux, un bord de fuite abaissé de plusieurs degrés, par rapport à la corde de référence particulière de ce dernier, pour permettre une vitesse plus faible à l'atterrissage - surtout en campagne- et également autoriser des treuillages plus efficaces puisque ces derniers pourront avoir lieu à une vitesse beaucoup plus faible.
Ceci par rapport aux tracés de base de chaque profil.
